# EUROPÄISCHE PATENTSCHRIFT

(11) **EP 1 524 741 B1**
(45) Veröffentlichungstag und Bekanntmachung des Hinweises auf die Patenterteilung: **03.12.2014**
(21) Anmeldenummer: 04023531.9
(22) Anmeldetag: 02.10.2004
(51) Int. Cl.: H02B 1/21

(54) **Niederspannungsschaltanlage**
Low voltage switchgear
Installation de commutation à basse tension

(30) Priorität: 14.10.2003 DE 10347582
(43) Veröffentlichungstag der Anmeldung: 20.04.2005
(73) Patentinhaber: ABB AG, 68309 Mannheim (DE)
(72) Erfinder: Merkel, Hans-Peter, 69198 Schriesheim (DE); Zank, Gunnar, 06179 Teutschenthal (DE); Bayer, Bardo, 68642 Bürstadt (DE)

(56) Entgegenhaltungen:
- EP-A- 0 425 393
- US-A- 2 363 327
- US-B1- 6 215 654
- US-B1- 6 392 141

## Beschreibung

Die Erfindung betrifft eine Niederspannungsschaltanlage nach dem Oberbegriff des Anspruches 1.Das Dokument US 6 215 654 offenbart eine Anlage gemäss dem Oberbegriff des Anspruchs 1.

Eine derartige Schaltanlage ist von der Firma ABB Schaltanlagen GmbH, Ladenburg, mit der Bezeichnung MNS-System vertrieben worden.

Diese bekannte Schaltanlage ist aus wenigstens einem Schaltschrank zusammen gesetzt, in dem wenigstens ein Einschubfach zum Einschieben wenigstens eines Einschubes vorgesehen ist, wobei die einzelnen Einschübe übereinander und nebeneinander angeordnet sein können. Auf bzw. in diesen Einschüben befinden sich Schalt-, Regel- und Steuergeräte. Jeder Einschub besitzt eine Kontaktierungsvorrichtung, die mit im hinteren Bereich des Schaltschrankes bzw. der Schaltanlage horizontal verlaufenden Hauptsammelschienen und gegebenenfalls mit senkrecht dazu bzw. vertikal verlaufenden Stromverteilschienen kontaktiert werden. Darüber hinaus ist eine Verkabelung vorgesehen, mit der Steuersignale auf die Schalt-, Regel- oder Steuergeräte übertragen werden können.

Bei diesen Schaltanlagen verlaufen die Leistungs- und Steuerkabel in einem gemeinsamen Kabelraum.

Aufgabe der Erfindung ist es, eine Niederspannungsschaltanlage der eingangs genannten Art zu verbessern, in dem die die Leistung führenden Leiter von den Steuerleiter oder Steuerkabeln getrennt sind, wodurch eine funktionale und elektrische Trennung erreicht werden kann.

Diese Aufgabe wird erfindungsgemäß durch die Merkmale des Anspruches 1 gelöst.

Erfindungsgemäß sind bei einer Schaltanlage wenigstens zwei horizontale Einschubreihen vorgesehen, die je einer Hauptsammelschienenanordnung zugeordnet sind; zwischen den Einschubreihen ist ein horizontal verlaufender erster Leiterführungsraum beispielsweise zur Aufnahme eines Rangierverteilers vorgesehen.

Darüber hinaus kann gemäß einer weiteren Ausgestaltung der Erfindung oberhalb und unterhalb beider Einschubreihen je ein horizontal verlaufender zweiter Leiterführungsraum vorgesehen werden. Darüber hinaus besteht die Möglichkeit, dass in jeder Einschubreihe zwischen zwei Einschüben wenigstens ein senkrecht verlaufender dritter Leiterführungsraum vorgesehen ist.

Weitere vorteilhafte Ausgestaltungen und Verbesserungen der Erfindung sind den weiteren Unteransprüchen zu entnehmen.

Anhand der Zeichnung, in der einige Ausführungsbeispiele der Erfindung dargestellt sind, sollen die Erfindung sowie weitere vorteilhafte Ausgestaltungen und Verbesserungen und weitere Vorteile näher erläutert und beschrieben werden.

Es zeigen jeweils in schematischer Darstellung:
- Fig. 1: eine Aufsicht auf die Frontseite einer erfindungsgemäßen ersten Schaltanlage,
- Fig. 2: eine Aufsicht gemäß Pfeilrichtung II der Fig. 1,
- Fig. 3: eine Aufsicht auf die Frontseite einer erfindungsgemäßen zweiten Schaltanlage, und
- Fig. 4 und 5: Querschnittsansichten zweier Schaltanlagen und unterschiedlichen Leiterführungsräumen

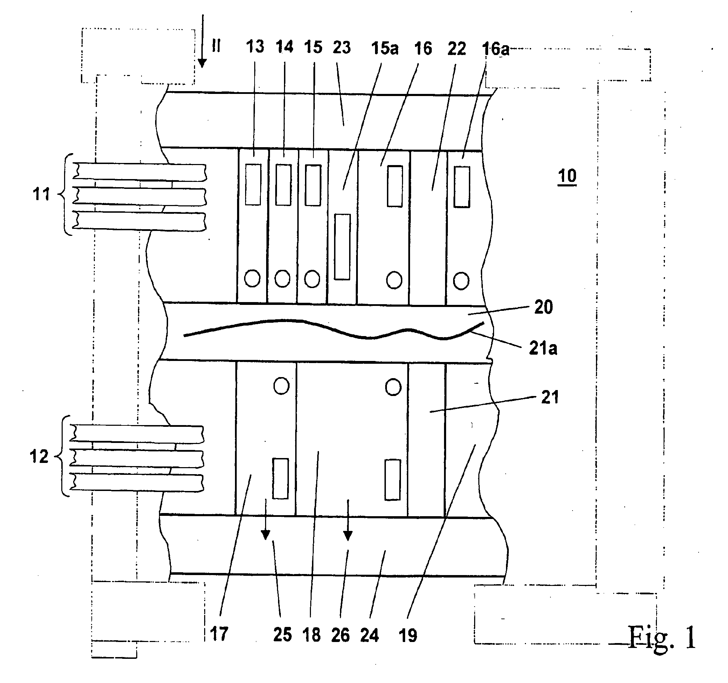

Die Fig. 1 zeigt eine Niederspannungsschaltanlage 10, in der sich in dem hinteren Bereich des lediglich schematisch angedeuteten Schaltschrankes (ohne Bezugsziffer) zwei Hauptsammelschienenanordnungen 11 und 12 befinden, die parallel zueinander und übereinander angeordnet sind. Der oberen Hauptsammelschienenanordnung 11 sind mehrere Einschübe 13, 14, 15 und 16 zugeordnet, die langgestreckt rechteckig in der Umfangskontur ausgebildet sind, wobei die längere Achse vertikal verläuft. Die drei Einschübe 13, 14 und 15 besitzen eine erste Einschubbreite, die mit z.B. bezeichnet wird. Ein Einschub 16 ist breiter als die Einschübe 13 bis 15.

Der unteren Hauptsammelschienenanordnung 12 sind weitere Einschübe 17, 18 und 19 zugeordnet, von denen die Einschübe 18 und 19 breiter sind als der Einschub 16. Die Einschubbreite kann von einem Bereich 2xB bis 24xB variiert, abhängig von der geforderten Leistungsgröße; zwischen diesen beiden Einschubgrößen sind Zwischengrößen in B- Schrittweite möglich.

Die Einschubbreite ist dabei die Breite eines Einschubes, die in horizontaler Richtung, d. h. in Anreihrichtung der Schaltschränke gemessen wird.

Zwischen den horizontalen Einschubreihen 13 bis 16 und 17 bis 19, also zwischen den oberen Einschubreihen und den unteren Einschubreihen, befindet sich ein horizontal verlaufender erster Leiterführungskanal 20, in dem beispielsweise Steuerkabel 21a geführt sind, die beispielsweise aus den Einschüben 13, 14, 15, 15a und 16 nach unten herausgeführt sind. Aus den Einschüben 17, 18 der unteren Einschubreihe können ggf. Leistungskabel nach oben in den Leiterführungskanal oder Leiterführungsraum 20 eingeführt werden, siehe weiter unten.

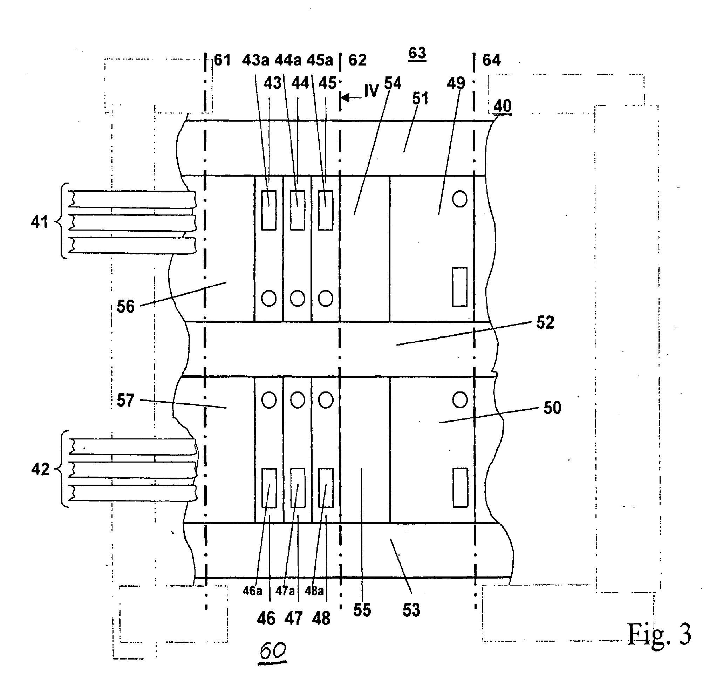

Zwischen zwei Einschüben 16, 16a der oberen Einschubreihe bzw. 18, 19 der unteren Einschubreihe befinden sich vertikal verlaufende, miteinander vertikal fluchtende zweite Leiterführungskanäle 22, 21, was ebenso weiter unten anhand der Fig. 3 näher erläutert werden soll. Die im ersten Leiterführungskanal 20 verlaufenden Steuerkabel 21 a können beispielsweise durch Rangierverteiler (nicht gezeichnet) einander zugeordnet sein; sie werden dann durch den unteren Leiterführungskanal 21 vertikal nach unten geführt.

Oberhalb der oberen Einschubreihe ist ein dritter Leiterführungshand 23 und unterhalb der unteren Einschubreihe ist ein vierter Leiterführungskanal 24 angeordnet. Die Leiterführungskanäle oder Leiterführungsräume können im folgenden auch kurz Kanäle genannt sein. Leistungsabgänge aus den Einschüben 17, 18, die durch die Pfeile 25 und 26 angedeutet sind, können auch in den vierten Kanal 24 eingeführt werden, nicht nur in den Kanal 20.

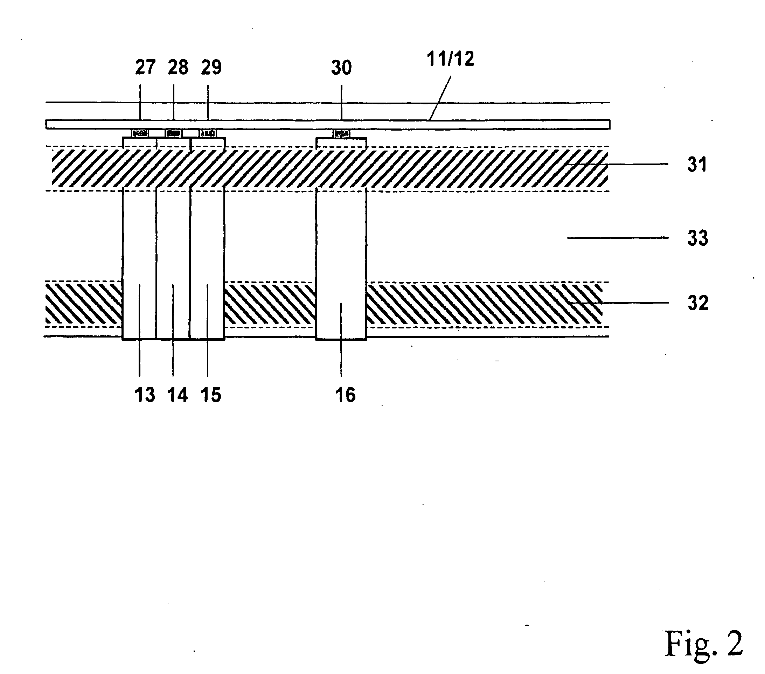

Die Fig. 2 zeigt die Anordnung der Einschübe sowie strichliert und schraffiert dargestellt bestimmte Bereiche für bestimmte Leiter.

Die Fig. 2 zeigt dabei eine Einsicht von oben mit abgenommenem Dachblech; die drei Einschübe 13, 14 und 15 sowie der Einschub 16 bzw. die Einschübe 17 bis 19 (in Fig. 2 nicht dargestellt) reichen bis zu den Hauptsammelschienenanordnungen 11, 12 und sind an ihrem hinteren Ende über Kontaktierungseinrichtungen 27, 28, 29 und 30 mit Hauptsammelschienenanordnungen 11/12 verbunden.

Strichliert begrenzt und schraffiert sind zwei Bereiche 31 und 32, von denen der Bereich 31 für Steuer- und Kommunikationsleitungen und der Bereich 32 für die sogenannte Leistungsverkabelung vorgesehen sind; dazwischen befindet sich ein Bereich 33, der die Trennung zwischen dem Bereich 31 und dem Bereich 32 herbeiführt.

Die Bereiche 31, 32 und 33 sind sogenannte virtuelle Räume bzw. virtuelle Bereiche; in dem Bereich 31 würden im wesentlichen die Leistungskabel verlaufen, wogegen die Steuerkabel (Kommunikationskabel) im Bereich 32 liegen. Der mittlere Bereich 33 trennt - ebenfalls virtuell - die beiden Bereiche 31 und 32 voreinander, wie weiter unten noch näher erläutert werden soll.

Es sei nun Bezug genommen auf die Fig. 3. Dort ist eine andere Anordnung der Einschübe für eine Schaltanlage dargestellt, wie diejenige nach der Fig. 1.

Die Schaltanlage, die in ihrer Gesamtheit die Bezugsziffer 40 besitzt, enthält zwei Hauptsammelschienenanordnungen 41 und 42, die den Hauptsammelschienen 11 und 12 entsprechen. Diesen Hauptsammelschienenanordnungen 41 und 42 sind Einschübe 43, 44, 45 bzw. 46, 47 und 48 zugeordnet, wobei die Einschübe 43 und 46, 44 und 47, 45 und 48 einander gleichen und nur um 180° verschwenkt eingebaut sind, dergestalt, dass das Fenster 43a, 44a und 45a sich im oberen Bereich und die Fenster 46a, 47a und 48a sich im unteren Bereich der Schaltanlage 40 befinden. Der "verschwenkte" Einbau bedeutet, dass die unteren Einschübe um eine Achse, die senkrecht zu der Ebene der Hauptsammelschienenanordnung ausgerichtet ist, um 180° gegenüber den oberen Einschüben gedreht eingebaut werden.

In gleicher Weise besitzt die Schaltanlage gemäß Fig. 3 auch zwei um 180° gegeneinander versetzt bzw. gedreht angeordnete breitere Einschübe 49 und 50.

Oberhalb der Einschübe 43 bis 45, 49 befindet sich ein dem Leiterführungskanal 23 entsprechender Kanal 51; zwischen den beiden Einschubreihen 43, 44, 45, 49; 46, 47, 48, 50 befindet sich ein Leiterführungskanal oder Leiterführungsraum 52, der dem horizontalen Raum 20 entspricht, und im unteren Teil, also an der Unterseite der Schaltanlage befindet sich ein Leiterführungsraum 53, der dem Leiterführungsraum 24 entspricht.

Zwischen den Einschüben 43, 44 und 45 und dem Einschub 49 befindet sich ein senkrecht verlaufender Leiterführungskanal 54 und zwischen den Einschüben 46, 47 und 48 und dem Einschub 50 ein ebenfalls vertikal verlaufender Leiterführungskanal 55, wobei die beiden Kanäle 54 und 55 vertikal miteinander fluchten.

In entsprechender Weise befindet sich rechts neben den Einschüben 43, 46 ein dem vertikalen Kanal 54 entsprechender vertikaler Kanal 56 und links neben dem Einschub 46 ein Kanal 57, der mit dem Kanal 56 in vertikaler Richtung fluchtet.

Die Kanäle 56 und 57 und die Einschübe 43 bis 45 und 46 bis 48 bilden eine vormontierte Transporteinheit; die Transporteinheit 60 ist durch die strichpunktiert gezeichneten, senkrecht verlaufenden Linien 61 und 62 begrenzt. Dabei gehören zur Transporteinheit 60 die Kanäle 56 und 57. In gleicher Weise ist eine Transporteinheit 63 zwischen den beiden strichpunktiert gezeichneten Linien 62 und 64 dargestellt. Zu der Transporteinheit 63 gehören die drei Einschübe 49 und 50 sowie die Kanäle 54 und 55. Es besteht selbstverständlich auch die Möglichkeit, dass die beiden Transporteinheiten 60 und 63 fabrikfertig miteinander verbunden sind; in diesem Falle wäre eine verbreiterte Transporteinheit zwischen den strichpunktierten Linien 61 und 64 zu finden.

Die Verbindung der Transporteinheiten auf der Baustelle erfolgt in an sich bekannter Weise durch Schraubverbindung und dergleichen; hierüber wird hier nicht näher eingegangen, da derartige Verbindungen an sich bekannt und für die Erfindung auch nur von geringer Bedeutung sind.

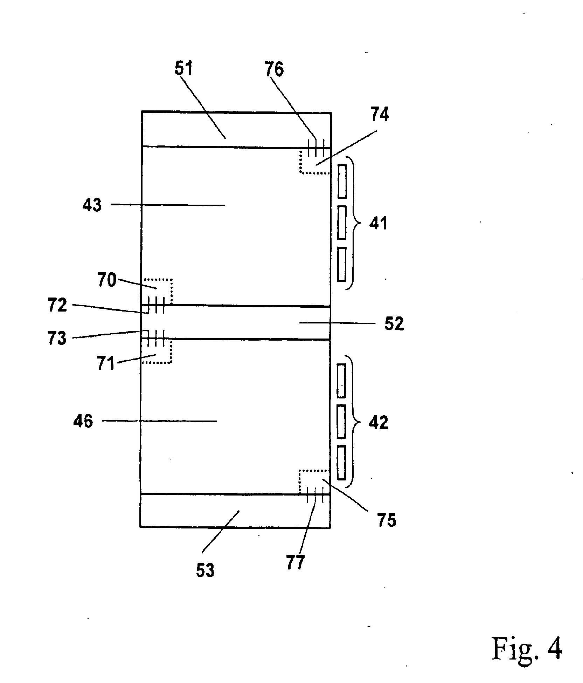

Die Fig. 4 zeigt eine Aufsicht auf die Transparenteinheit 60 gemäß der Pfeilrichtung IV auf die als Schnittlinie dienende strichpunktierte Linie 62. Übereinander angeordnet erkennt man die beiden Einschübe 43 und 46, sowie die Kanäle 51, 52 und 53. Die Einschübe 43 und 46 besitzen in ihrem der Frontseite zugewandten und einander zugewandten Eckabschnitt einen Raum 70 bzw. 71, aus dem heraus Steuerleitungen 72 bzw. 73 in den Kanal 52 herausgeführt sind. An den entgegengesetzt liegenden Eckbereichen auf der hinteren Seite der Einschübe 43 und 46 ist ein Raum 74 und 75 vorgesehen, aus dem heraus Leistungskabel 76 in den Raum 51 bzw. 77 in den Raum 53 geführt sind.

Die Ausführung gemäß der Fig. 4 ist die Normal- Ausführung; es ist hierbei ersichtlich, dass sich die Einschübe 43 und 46 gleichen und nur um 180° verdreht montiert sind. Die Hauptsammelschienenanordnungen 41 und 42 sind natürlich nach hinten abgedeckt und befinden sich in einem Hauptsammelschienenführungsraum (nicht dargestellt).

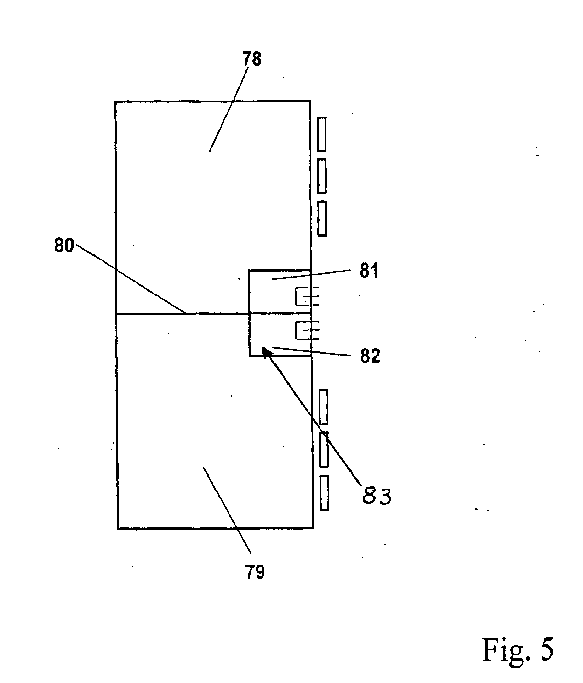

Bei der Ausführung gemäß Fig. 5 ist ein dem Kanal 52 entsprechender Kanal nicht vorhanden; die Einschübe 78 und 79 sind jeweils direkt gegeneinander gelegt, wobei sich im hinteren Bereich dieser Trennebene 80 im Einschub 78 eine Aussparung 81 und im Einschub 79 eine Aussparung 82 befindet; diese Aussparungen 81 und 82 bilden miteinander einen Leiterführungskanal, der hier die Bezugsziffer 83 besitzt.

Die Transporteinheiten 60, 63 sind auch als Schaltfelder zu bezeichnen.

Der größte Einschub, also derjenige mit der Breite von 24xB, entspricht der Schaltfeldbreite abzüglich der horizontalen Breite des Kanals 54, 55 bzw. 56, 57.

Wie aus der Fig. 4 zu entnehmen ist, verlaufen die Steuerkabel in dem Abschnitt des Kanals 52, der in horizontaler Richtung von den Räumen 70 und 71 überdeckt ist. In entsprechender Weise verlaufen die Leistungskabel aus dem Raum 74 in den Abschnitt des Kanals 51 bzw. aus dem Raum 75 in den Abschnitt des Kanals 53, welche jeweils von den Aussparungen oder Räumen 74, 75 überdeckt sind. Damit liegen die Bereiche 31 und 32 (siehe Fig. 2) zwischen den Aussparungen 70, 71 bzw. oberhalb bzw. unterhalb der Aussparungen 74 und 75, und sind damit voneinander getrennt, wobei die Trennung in horizontaler Richtung in Anreihrichtung eine virtuelle Trennung ist beider Trennwände nicht vorhanden sind. Der Bereich 31 liegt dabei, wie aus der Fig. 5 ersichtlich ist, in den Kanälen 51, 54, 55 und 53 hinten, wogegen der Bereich 33 immer im Kanal 52 verläuft bzw. auch im vorderen Bereich über die Kanäle 54 und 55 in den unteren Kanal 53 sich fortsetzt.

Bei der Ausführung gemäß Fig. 5 sind die in den Kanal 83 hineingeführten Kabel an Steckerelementen ansteckbar, so dass jeder Einschub leicht herausgezogen werden kann.

## Patentansprüche

1. Niederspannungsschaltanlage, mit einem Schrank, in dem wenigstens vier Einschubfächer zum Einschieben jeweils wenigstens eines Einschubes vorgesehen sind, mit Hauptsammelschienen, die mit elektrischen Leitern z.B. mit Kabeln, und/oder Kontaktierungseinrichtungen zur Verteilung des Stromes auf den wenigstens einen Einschub und Verteilung des Stromes vorn Einschub auf wenigstens einen Abgang verbunden sind, und mit Steuerkabeln die mit in dem wenigstens einen Einschub zur Ansteuerung von in dem wenigstens einen Einschub befindlichen elektrischen Geräten, z. B. Schalt- oder Steuergeräten verbunden sind, wobei wenigstens zwei horizontale Einschubreihen vorgesehen sind, die je einer Hauptsammelschienenanordnung zugeordnet sind, wobei die einzelnen Einschübe innerhalb einer Einschubreihe nebeneinander angereiht sind, und dass zwischen den Einschubreihen ein horizontal verlaufender erster Leiterführungsraum z. B. mit einem Ranglerverteiler, vorgesehen ist **dadurch gekennzeichnet, dass** oberhalb und unterhalb beider Einschubreihen je ein horizontal verlaufender zweiter Leiterführungsraum vorgesehen ist und dass in jeder Einschubrelhe wenigstens ein zwischen jeweils zwei Einschüben senkrecht bzw. vertikal verlaufender dritter Leiterführungsraum vorgesehen ist, die miteinander vertikal fluchten und dass die Steuerleiter und Leistungsleiter in je einem Bereich in den Leiterführungsräumen geführt sind, voneinander getrennt Im ersten und/oder im oberen und/oder im unteren zweiten Kabelführungsraum angeordnet sind.

2. Niederspannungsschaltanlage nach Anspruch 1, **dadurch gekennzeichnet, dass** die Einschübe sich im mittleren Bereich der Schaltanlage berühren und dass ein zweiter Leiterführungsraum dadurch gebildet ist, dass die Einschübe in ihrem den Hauptsammelschienenanordnungen zugewandten Bereich der Trennebene zwischen den Einschüben jeweils eine Aussparung besitzen, die sich gegenüberliegen und damit gemeinsam den zweiten Leiterführungskanal bilden.

## Claims

1. Low-voltage switchgear, comprising a cabinet, in which at least four bays for inserting in each case at least one withdrawable part are provided, comprising main busbars, which are connected to electrical conductors, for example to cables, and/or contact-making devices for distributing the current over the at least one withdrawable part and distributing the current from the withdrawable part over at least one outgoing feeder, and comprising control cables, which are connected to electrical devices located in the at least one withdrawable part for driving said electrical devices located in the at least one withdrawable part, for example switching or control devices, wherein at least two horizontal withdrawable-part rows are provided, which are each assigned to a main busbar arrangement, wherein the individual withdrawable parts are arranged next to one another in a row within a withdrawable-part row, and wherein a horizontally extending first conductor-routing area, for example with a jumper distribution frame is provided between the withdrawable-part rows, **characterized in that** in each case one horizontally extending second conductor-routing area is provided above and below both withdrawable-part rows, and **in that** at least one third conductor-routing area is provided in each withdrawable-part row, which third conductor-routing area extends perpendicularly or vertically between in each case two withdrawable parts and are aligned vertically with one another, and **in that** the control lines and power conductors are routed in in each case one region in the conductor-routing areas and are arranged separately from one another in the first and/or in the upper and/or in the lower second cable-routing area.

2. Low-voltage switchgear according to Claim 1, **characterized in that** the withdrawable parts touch one another in a central region of the switchgear, and **in that** a second conductor-routing area is formed by virtue of the fact that the withdrawable parts have in each case one cutout **in that** region of the plane of separation between the withdrawable parts which faces the main busbar arrangements, which cutouts are opposite one another and thus together form the second conductor-routing channel.

## Revendications

1. Installation de commutation basse tension, comprenant une armoire, dans laquelle sont prévus au moins quatre compartiments d'insertion pour insérer à chaque fois au moins un tiroir, comprenant des barres omnibus principales qui sont connectées à des conducteurs électriques, par exemple à des câbles, et/ou à des dispositifs de contact pour la distribution du courant à l'au moins un tiroir et la distribution du courant depuis le tiroir à au moins une sortie, et comprenant des câbles de commande qui sont connectés à des appareils électriques se trouvant dans l'au moins un tiroir pour commander des appareils électriques se trouvant dans l'au moins un tiroir, par exemple des appareils de commutation ou de commande, au moins deux rangées de tiroirs horizontales étant prévues, lesquelles sont associées à chaque fois à un agencement de barres omnibus principales, les tiroirs individuels étant alignés les uns à côté des autres dans une rangée de tiroirs et entre les rangées de tiroirs étant prévu un premier espace de guidage de conducteurs s'étendant horizontalement, par exemple avec un répartiteur, **caractérisée en ce qu'**au-dessus et en dessous des deux rangées de tiroirs est à chaque fois prévu un deuxième espace de guidage de conducteurs s'étendant horizontalement et **en ce que** dans chaque rangée de tiroirs est prévu au moins un troisième espace de guidage de conducteurs s'étendant verticalement ou perpendiculairement entre deux tiroirs respectifs, lesquels sont en alignement vertical l'un avec l'autre, et **en ce que** les conducteurs de commande et les conducteurs de puissance sont guidés à chaque fois dans une région dans les espaces de guidage de conducteurs et sont disposés de manière séparée les uns des autres dans le premier espace de guidage de câble et/ou dans le deuxième espace de guidage de câble supérieur et/ou inférieur.

2. Installation de commutation basse tension selon la revendication 1, **caractérisée en ce que** les tiroirs sont en contact dans la région centrale de l'installation de commutation et **en ce qu'**un deuxième espace de guidage de conducteurs est formé par le fait que les tiroirs, dans leur région du plan de séparation tournée vers les agencements de barres omnibus principales, possèdent, entre les tiroirs, à chaque fois un évidement, lesquels évidements sont opposés et forment ainsi ensemble le deuxième canal de guidage de conducteurs.
